# FASCICULE DE BREVET EUROPEEN

(11) **EP 1 119 726 B1**
(45) Date de publication et mention de la délivrance du brevet: **30.01.2002**
(21) Numéro de dépôt: 99941699.3
(22) Date de dépôt: 06.09.1999
(51) Int. Cl.: F16L 11/16, F16L 11/08

(54) **CONDUITE FLEXIBLE A FRETTE DE FORTE INERTIE**
FLEXIBLES LEITUNGSROHR MIT GROSSER TRÄGHEIT AUFWEISENDER VERSTÄRKUNG
FLEXIBLE CONDUIT WITH HIGH INERTIA HOOP

(30) Priorité: 12.10.1998 FR 9812746
(43) Date de publication de la demande: 01.08.2001
(73) Titulaire: COFLEXIP, 75116 Paris (FR)
(72) Inventeur: DUPOIRON, François, F-76360 Barentin (FR); ESPINASSE, Philippe, François, F-76420 Bihorel (FR); JUNG, Patrice, F-76940 La Mailleraye-sur-Seine (FR); HOUOT, Bernard, Jacques, F-76360 Bouville (FR)
(74) Mandataire: Bertrand, Didier
(86) Numéro de dépôt international: FR9902116
(87) Numéro de publication internationale: WO0022337

(56) Documents cités:
- FR-A- 2 590 646
- GB-A- 2 156 031
- US-A- 4 903 735
- US-A- 5 730 188

## Description

La présente invention concerne une conduite flexible pour véhiculer sur de grandes distances un fluide sous pression et le cas échéant sous haute température, tel qu'un gaz, du pétrole, de l'eau ou d'autres fluides. L'invention vise tout particulièrement une conduite destinée à une exploitation pétrolière en mer. Elle vise notamment : d'une part les conduites de fond, dites "flow-lines", c'est-à-dire des conduites flexibles déroulées à partir d'un bateau pour être posées généralement sur le fond de la mer et connectées aux installations sous-marines, de telles conduites travaillant principalement en statique ; d'autre part, les colonnes montantes, dites "risers", c'est-à-dire des conduites flexibles déroulées à partir d'une installation de surface telle qu'une plate-forme et qui sont connectées aux installations sous-marines et dont la majeure partie ne repose pas sous le fond marin, de telles conduites travaillant essentiellement en dynamique.

Les conduites flexibles utilisées en mer doivent pouvoir résister à des pressions internes et/ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les normes API 17 B et API 17 J établies par l'American Petroleum Institute sous l'intitulé "Recommended Practice for Flexible Pipe.

Pour les conduites destinées aux plus grandes profondeurs, où le risque d'écrasement (en anglais "collapse") de la conduite sous pression externe est plus grand, on utilise une configuration dite "rough bore" (à passage non-lisse). De telles conduites comprennent généralement de l'intérieur vers l'extérieur :
- une carcasse constituée d'un feuillard agrafé, qui sert à empêcher l'écrasement sous pression ;
- une gaine d'étanchéité interne réalisée en matière plastique, généralement polymère, résistant plus ou moins à l'action chimique du fluide à transporter ;
- une voûte de pression résistant à la pression externe mais principalement à la pression développée par le fluide (pression interne) dans la gaine d'étanchéité et qui se traduit par des efforts circonférentiels sur la voûte de pression ; la voûte de pression comprend généralement un enroulement en hélice à pas court (c'est-à-dire avec un angle d'enroulement par rapport à l'axe de la conduite compris entre 75° et sensiblement 90°) autour de la gaine interne, d'un ou plusieurs fils métalliques de forme agrafés (auto-agrafables ou non) ; ces fils de forme sont typiquement de section en T, U et Z et leurs variantes, connues sous le nom de « téta » et « zêta » ;
- au moins une nappe (et généralement au moins deux nappes croisées) d'armures de traction dont l'angle d'armage mesuré sur l'axe longitudinal de la conduite est inférieur à 55° ; et
- une gaine de protection et d'étanchéité externe en polymère.

Lorsque la conduite est destinée à véhiculer un fluide sous pression élevée, on prévoit de renforcer la conduite en grossissant le fil de forme utilisé pour réaliser la voûte de pression. Or, l'enroulement de fil de la voûte de pression est à spires non jointives pour doter la conduite d'une certaine flexibilité. Par spires non jointives, on entend des spires entre lesquelles est ménagé un certain espace ou interstice, dénommé par la suite "déjoint", et qui peut être d'autant plus grand que le fil de forme enroulé est gros.

Sous l'effet de la pression interne et/ou de la température développées par le fluide, la gaine d'étanchéité interne qui est relativement souple, est plaquée contre la face interne de la voûte de pression et a tendance à pénétrer dans un ou plusieurs déjoints entre spires. La tendance à la pénétration ou fluage de la gaine d'étanchéité augmente avec la durée et/ou les conditions sévères d'utilisation de la conduite flexible, par exemple lorsque le fluide à véhiculer circule sous forte pression (plusieurs centaines de bars) et/ou forte température (supérieure à 100°C), une température élevée diminuant généralement la rigidité de la gaine d'étanchéité interne. Lorsque la gaine d'étanchéité pénètre progressivement dans les déjoints, il se produit soit des craquelures affectant ainsi la fonction d'étanchéité de la gaine interne, soit même une ou plusieurs ruptures locales de la gaine interne, la conséquence de tels incidents étant une intrusion du fluide à l'extérieur de la gaine interne qui n'assure plus l'étanchéité requise.

Pour limiter ou tenter d'empêcher le fluage de la gaine interne dans les déjoints entre spires de la voûte de pression, plusieurs solutions ont été proposées, comme le choix d'un matériau plus épais et/ou plus résistant pour la gaine, ce qui entraîne généralement une augmentation du prix de revient de la conduite et souvent une complication de sa fabrication. Une solution très intéressante a été proposée dans le document FR 2 744 511 A, qui consiste à enrouler autour de la gaine d'étanchéité un ruban anti-fluage ayant des caractéristiques spécifiques, ce ruban venant former une sous-couche située sous la face interne de la voûte de pression, mais l'efficacité de cette solution rencontre des limites aux pressions élevées et aux diamètres de flexible élevés.

Une autre solution a été développée par la Demanderesse spécifiquement pour les conduites utilisées dans des conditions extrêmes (c'est-à-dire en grande profondeur et/ou avec une forte pression interne et/ou avec de gros diamètres de conduites) et fait l'objet de la demande de brevet FR 98 10254. Selon cette solution, la voûte comprend un élément-cache allongé masquant au moins partiellement les déjoints du fil de forme en regard de la gaine interne. L'élément-cache allongé, de préférence plat, est disposé hélicoïdalement avantageusement dans et à l'arrière de la face interne de la voûte de pression de manière à ne pas faire saillie par rapport au volume annulaire de la voûte; l'élément-cache peut être réalisé notamment par un fil rapporté inséré dans la face interne de la voûte ou bien par des parties du fil de forme lui-même en recouvrement au niveau de la face interne de la voûte.

Par ailleurs, pour augmenter la résistance à la pression interne de la voûte de pression, il est connu, par exemple par la norme API 17J précitée, de prévoir à titre accessoire une couche dite de frette constituée par un enroulement également à pas court de fil rectangulaire plat qui vient se superposer au fil de forme constituant alors la première couche de la voûte de pression, ce nouvel enroulement de doublage étant naturellement sans agrafage. Le document EP 0 796 404 A au nom de la Demanderesse montre une frette surmontant un enroulement de fil en «téta» agrafé, et les documents US 4 903 735 A, 5 275 209 A, et US 5 730 188 A montrent une frette surmontant un enroulement en « zêta » auto-agrafable.

A la connaissance de la Demanderesse, la frette est toujours un fil plat relativement peu épais (généralement inférieur à 7,5 mm) et toujours inférieur à l'épaisseur du fil de forme constituant la première couche de la voûte de pression qui exerce à titre principal la fonction de résistance à la pression. Une telle épaisseur est suffisante pour que la frette assure le rôle d'accessoire du fil de forme qu'on lui donne dans la résistance à la pression interne.

Enfin, il est connu que la carcasse peut se déformer, lorsqu'une charge importante lui est appliquée, suivant deux modes principaux, à savoir le mode cardioïde et le mode ovalisé, plus défavorable. Lorsque la conduite doit être utilisée en grande profondeur, on sait que pour éviter que l'ovalisation de la carcasse apparaisse trop rapidement, il faut dimensionner la voûte de pression en conséquence.

Quoiqu'une telle conduite résistante typique, avec sa carcasse agrafée, sa gaine d'étanchéité, et sa voûte de pression comportant le fil de forme agrafé et la frette, donne satisfaction sur le plan technique, elle est relativement coûteuse, et ce coût augmente encore lorsqu'il s'agit de conduites en conditions extrêmes : le fil de forme à section complexe est d'autant plus cher qu'il est plus gros et lourd, tant en matière première qu'en mise en oeuvre ; de plus, les déjoints dont la taille suit celle du fil de forme obligent à prendre des mesures pour lutter contre le fluage de la gaine d'étanchéité, comme par exemple augmenter l'épaisseur de la gaine.

L'invention a pour but de proposer une conduite flexible ayant sensiblement les mêmes performances techniques en termes de résistance au fluage, de pression de service et de pression d'effondrement (« collapse »), notamment dans son utilisation en conditions extrêmes, mais dont la constitution est modifiée pour parvenir à un coût de fabrication moindre.

Le but de l'invention est atteint par une conduite tubulaire flexible comprenant au moins, de l'intérieur vers l'extérieur, une carcasse en feuillard agrafé, une gaine d'étanchéité interne en matière polymère, un enroulement en hélice à pas court d'un élément métallique agrafé disposé au-dessus de la gaine interne, au moins une frette constituée d'un fil métallique enroulé sans agrafage à pas court, au moins une nappe d'armures de traction enroulées à pas long autour de la voûte de pression et une gaine de protection et d'étanchéité externe en polymère; l'épaisseur de la frette étant supérieure à l'épaisseur de l'élément métallique. Ainsi, selon l'invention, la voûte de pression, selon la revendication 1 comprise ici en ce qu'elle désigne la structure destinée à reprendre les efforts circonférentiels engendrés par la pression interne, est essentiellement constituée d'au moins un enroulement de frette, c'est-à-dire d'un enroulement à pas court de fil non agrafé. Par « essentiellement », on entend que la frette joue non plus de manière accessoire mais de manière principale le rôle de résistance à la pression interne et externe, auparavant joué par le fil de forme, ce qui, en pratique se traduit par l'utilisation d'une frette d'épaisseur plus forte et donc d'inertie plus forte, pour une conduite de diamètre donné et de résistance recherchée donnée, que la frette classique.

L'invention est fondée sur une réinterprétation totale des fonctions de la voûte de pression. Alors que dans une structure traditionnelle, l'enroulement de fil de forme agrafé assure essentiellement la résistance à la pression interne par rapport à la frette, dans la structure proposée par l'invention, c'est la frette qui joue le rôle essentiel dans la résistance à la pression interne. Des deux autres fonctions de l'enroulement de fil de forme agrafé, à savoir la résistance conjointe à l'écrasement (ou plus exactement à l'ovalisation, en coopération avec la carcasse) et éventuellement la résistance au fluage de la gaine d'étanchéité, la première peut être aussi partiellement transférée à la frette dont l'inertie est augmentée (du fait de l'augmentation d'épaisseur) par rapport à celle d'une frette traditionnelle, tandis que la seconde est conservée par un fil de forme agrafé, qui dans ce cas a une section bien plus faible que dans une conduite traditionnelle de même application, voire transférée à un simple feuillard agrafé.

Lorsque l'élément métallique agrafé est un fil de forme, notamment un fil à section en « zeta », il est avantageux que l'épaisseur de la frette soit comprise entre environ 1 et 3 fois l'épaisseur dudit fil de forme. Quoique les dimensions de la frette soient à déterminer en fonction du diamètre de la conduite, des sections de frette de 15 mm d'épaisseur et plus sont facilement envisageables. La largeur de la frette n'est pas critique, mais des sections de 15x25 mm² peuvent être citées à titre d'exemple. La section de la frette n'est d'ailleurs pas nécessairement rectangulaire (ou carrée) ; de manière générale, tout profil dont les faces supérieure et inférieure sont planes convient. La section peut par ailleurs être allégée tout en conservant l'inertie requise, par exemple par des concavités sur ses faces latérales ou des évidements intérieurs.

Comme il a été dit plus haut, ledit élément métallique agrafé de la voûte de pression peut n'être qu'un feuillard agrafé, par exemple analogue au feuillard de la carcasse.

L'invention sera mieux comprise et d'autres avantages et caractéristiques seront mis en évidence à la lecture de la description suivante d'exemples de réalisation de la conduite flexible selon l'invention.

On se référera aux dessins annexés sur lesquels :
- la figure 1 est une vue en perspective schématique montrant les couches successives d'une conduite de type "rough bore" de l'art antérieur,
- la figure 2 est une vue partielle en coupe longitudinale de la conduite de la figure 1, montrant le détail de la voûte de pression traditionnelle avec frette,
- la figure 3 est une vue analogue à la figure 2 d'un premier mode de réalisation d'une conduite flexible selon l'invention,
- la figure 4 est une vue analogue à la figure 2 d'un deuxième mode de réalisation d'une conduite flexible selon l'invention.

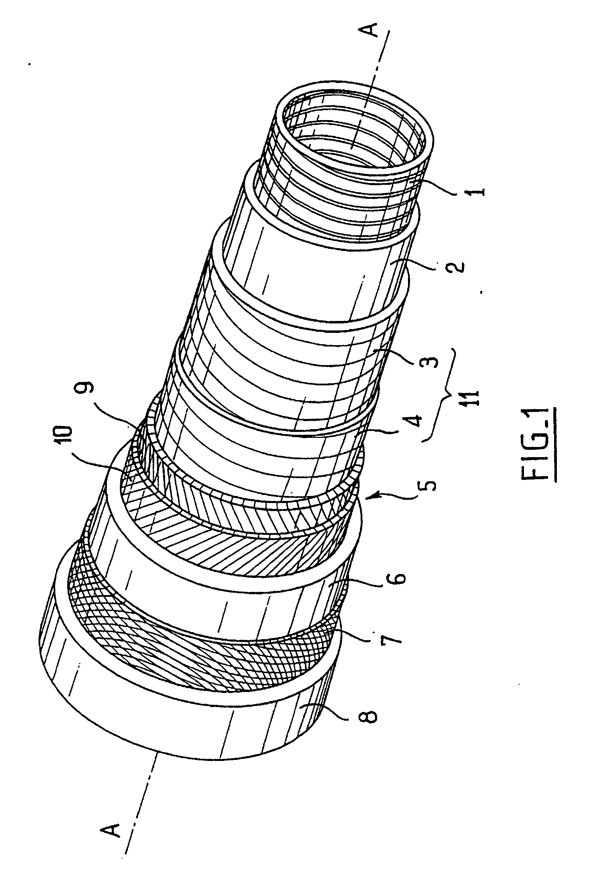

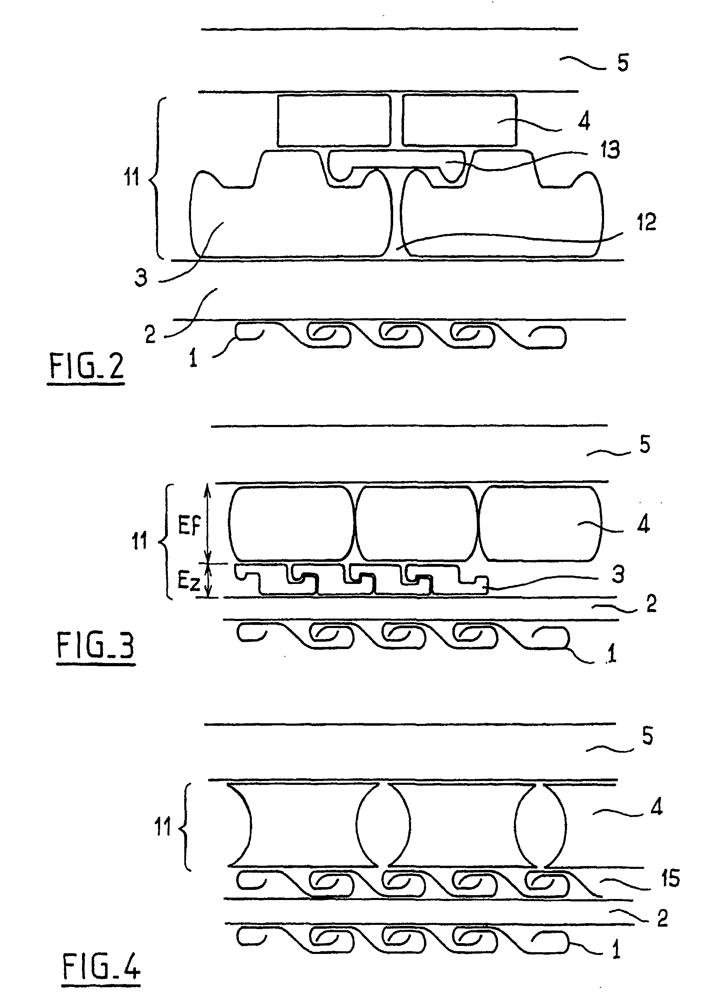

Comme le montrent les figures 1 et 2, une conduite de type "rough bore" comprend de l'intérieur vers l'extérieur : une carcasse métallique 1, généralement réalisée par un feuillard agrafé et destinée à la résistance à l'écrasement sous pression externe ; une gaine d'étanchéité interne polymérique 2, une voûte de pression métallique 11, constituée ici de manière traditionnelle par l'enroulement en hélice à pas court (angle d'enroulement généralement voisin de 90° par rapport à l'axe de la conduite) d'un fil métallique de forme agrafé 3 doublé par l'enroulement en hélice à pas court d'un fil de frette 4, une armure 5 résistant à la traction axiale dans le sens longitudinal de la conduite et classiquement constituée d'une ou plusieurs paires de nappes croisées 9, 10 d'enroulement à pas long (typiquement moins de 55° par rapport à l'axe de la conduite) en sens contraire, et d'une gaine d'étanchéité externe polymérique 8. D'autres couches intermédiaires telles que les couches 6, 7 peuvent être prévues selon le type et la destination de la conduite.

Comme le montre plus particulièrement la figure 2, dans le cas d'une conduite de l'art antérieur destiné à de grandes profondeurs, on utilise par exemple pour le fil de forme 3 un fil en « teta » de forte section, d'épaisseur par exemple de 14 mm agrafé par un fil d'agrafe 13 en U plat, et un fil de frette plat 4 d'épaisseur par exemple de 7,5 mm. Compte tenu de l'épaisseur du fil de forme 3 et des déjoints nécessaires 12 entre spires consécutives, on prévoit une gaine d'étanchéité 2 d'assez forte épaisseur pour résister au fluage entre spires.

La figure 3 montre la structure de la conduite conforme à l'invention et destinée aux mêmes applications que la conduite de la figure 2. Elle se caractérise par une voûte de pression 11 constituée d'une forte frette 4 (constituée d'un ou plusieurs fils, comme connu en soi), par exemple de 13,5 mm d'épaisseur Ef, et un (ou plusieurs) fil de forme 3 de faible section, ici par exemple un fil « zêta » auto-agrafable de 8 mm d'épaisseur Ez. D'une manière générale, il est avantageux que le rapport Ef/Ez soit compris entre environ 1 et 3, au lieu d'être inférieur à 1 comme dans l'art antérieur. Du fait qu'on a pu utiliser selon l'invention un fil de forme « zeta » de faible section qui présente naturellement des déjoints plus faibles que ceux du gros fil « téta » de la figure 2, la gaine d'étanchéité 2 peut avoir une épaisseur plus faible que celle de la figure 2 puisque les risques de fluage sont moins grands.

Compte tenu du prix moins élevé du fil peu épais « zêta » par rapport au fort « téta », tant en matière première qu'en mise en oeuvre, ainsi que du gain en épaisseur de gaine d'étanchéité, et malgré une frette dont le poids est augmenté, le prix global de la conduite de l'invention est réduit très sensiblement par rapport à la conduite techniquement équivalente de l'art antérieur, d'environ 20 à 30%.

La frette épaisse 4 est avantageusement enroulée sur la conduite à l'aide de la spiraleuse décrite dans la demande FR 97 10584, qui permet de spiraler des fils de forte inertie.

Dans le mode de réalisation de la figure 4, la fonction anti-fluage est assurée par une couche 15 de feuillard agrafé, qui peut en outre jouer une certaine fonction dans la résistance à l'écrasement. On a représenté pour la frette 4 une section allégée par des concavités latérales.

## Revendications

1. Conduite tubulaire flexible comprenant au moins, de l'intérieur vers l'extérieur, une carcasse (1) en feuillard agrafé, une gaine d'étanchéité interne (2) en matière polymère, un enroulement en hélice à pas court d'un élément métallique agrafé (3) disposé au- dessus de la gaine interne (2), au moins une frette (4) constituée d'un fil métallique enroulé sans agrafage à pas court, au moins une nappe (5) d'armures de traction enroulées à pas long autour de la voûte de pression, constituée de l'enroulement en hélice à pas court de l'élément métallique agrafé (3) et d'au moins la frette (4) constituée d'un fil métallique enroulé sans agrafage à pas court, et une gaine (8) de protection et d'étanchéité externe en polymère ; **caractérisée en ce que** l'épaisseur (Ef) de la frette (4) est supérieure à l'épaisseur (Ez) de l'élément métallique (3).

2. Conduite selon la revendication 1, **caractérisée en ce que** ledit élément métallique est un fil de forme (3).

3. Conduite selon la revendication 2, **caractérisée en ce que** l'épaisseur (Ef) de la frette (4) est comprise entre environ 1 et 3 fois l'épaisseur (Ez) dudit fil de forme (3).

4. Conduite selon l'une quelconque des revendications 2 ou 3, **caractérisée en ce que** le fil de forme (3) est un fil à section en « zeta ».

5. Conduite selon la revendication 1, **caractérisée en ce que** ledit élément métallique (3) est un feuillard agrafé.

## Patentansprüche

1. Flexibles Leitungsrohr, welches von innen nach außen mindestens aufweist:
eine Karkasse (1) aus mit sich verbördeltem Stahlband, eine innere Dichtungshülle (2) aus Polymermaterial, eine eng gewickelte Schraubenwicklung eines verbördelten Metallelementes (3), die über der inneren Hülle (2) angeordnet ist, mindestens eine Bewehrung (4) aus einem eng gewickelten, nicht verbördeltem Metalldraht, mindestens eine Schicht (5) von Zugarmierungen, die in offener Wicklung um das Druckgewölbe herum gewickelt sind, welches aus der eng gewickelten Schraubenwicklung des verbördelten Metallelementes (3) und mindestens der Bewehrung (4) aus dem eng gewickelten, nicht verbördelten Metalldraht besteht, und eine äußere Schutz- und Dichtungshülle (8) aus Polymer,
**dadurch gekennzeichnet, daß** die Dicke (Ef) der Bewehrung (4) größer als die Dicke (Ez) des Metallelementes (3) ist.

2. Leitungen nach Anspruch 1,
**dadurch gekennzeichnet, daß** das Metallelement ein Profildraht (3) ist.

3. Leitung nach Anspruch 2,
**dadurch gekennzeichnet, daß** die Dicke (Ef) der Bewehrung (4) zwischen ungefähr dem Ein- und Dreifachen der Dicke (Ez) des Profildrahtes (3) liegt.

4. Leitung nach einem der Ansprüche 2 oder 3,
**dadurch gekennzeichnet, daß** der Profildraht (3) ein Draht mit Z-förmigem Querschnitt ist.

5. Leitung nach Anspruch 1,
**dadurch gekennzeichnet, daß** das Metallelement (3) ein verbördeltes Stahlband ist.

## Claims

1. A flexible tubular pipe comprising at least, from the inside outward, a carcass (1) made of interlocked metal strip, an internal sealing sheath (2) made of a polymer material, a helical winding with a short pitch of an interlocked metal element (3) placed on top of the internal sheath (2), at least one hoop (4) consisting of a non-interlocked metal wire wound with a short pitch, at least one ply (5) of tensile armor layers wound with a long pitch around the pressure vault consisting of the helical winding with a short pitch of the interlocked metal element (3) and of the at least one hoop (4) made from a non-interlocked metal wire wound with a short pitch, and an external protective sealing sheath (8) made of a polymer, **characterized in that** the thickness (Ef) of the hoop (4) is greater than the thickness (Ez) of the metal element (3).

2. The pipe as claimed in claim 1, **characterized in that** said metal element is a profiled wire (3).

3. The pipe as claimed in claim 2, **characterized in that** the thickness (Ef) of the hoop (4) is between about 1 and 3 times the thickness (Ez) of said profiled wire (3).

4. The pipe as claimed in either of claims 2 and 3, **characterized in that** the profiled wire (3) is a wire with a "zeta" cross section.

5. The pipe as claimed in claim 1, **characterized in that** said metal element (3) is an interlocked metal strip.
